# EUROPEAN PATENT APPLICATION

(11) **EP 2 781 563 A2**
(43) Date of publication of application: **24.09.2014**
(21) Application number: 14155906.2
(22) Date of filing: 20.02.2014
(51) Int. Cl.: C09D 11/00

(54) **Ink for ink jet recording, recording apparatus, and recorded medium**

(30) Priority: 22.03.2013 JP 2013060995
(71) Applicant: Seiko Epson Corporation, Shinjuku-ku Tokyo (JP)
(72) Inventor: Okuyama, Tomoyuki, Suwa-shi, Nagano 392-8502 (JP); Hayashi, Hiroko, Suwa-shi, Nagano 392-8502 (JP)
(74) Representative: Miller Sturt Kenyon

(57) **Abstract**

An ink for ink jet recording includes a chelating agent represented by Structural Formula (1) or (2) and water. The ink has a hydrogen ion exponent (pH) of more than 7 and 10 or less. 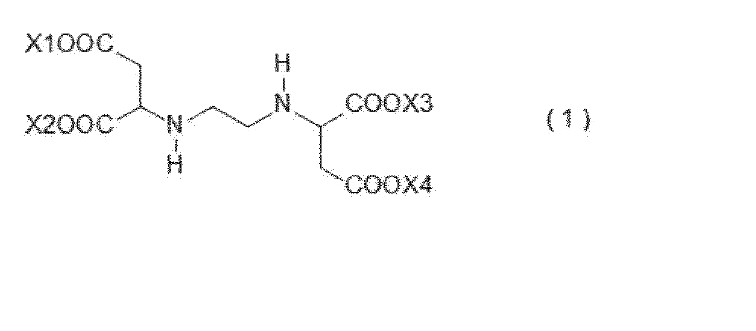 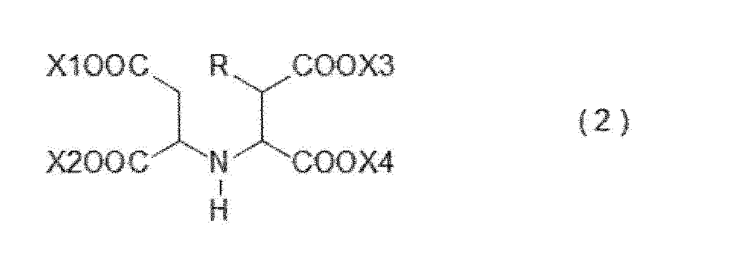 (where R represents a hydrogen atom or a hydroxyl group and X1 to X4 each independently represent a hydrogen atom, an alkali metal atom, an alkaline-earth metal atom, or an ammonium group)

## Description

### BACKGROUND

### 1. Technical Field

The present invention relates to an ink for inkjet recording, a recording apparatus, and a recorded medium.

### 2. Related Art

A recording method in which an inkjet method is employed has advantages in that, for example, little noise is produced during recording and fast recording, high-density recording, and color recording are realized readily. An ink containing water, that is, a water-based ink has been widely used as an ink for ink jet recording because of its droplet-ejection consistency, ease with which it dries on a record medium, prevention of problems caused by volatile organic compounds, and the like.

However, there have been issues with water-based ink used for inkjet recording in that, for example, the water-based ink may cause unsuccessful droplet ejection, which results in formation of an irregular image. It has been considered that metal ions contained in an ink which precipitate as a metal may be one of the factors that leads to unsuccessful droplet ejection in an ink jet method. Thus, there have been attempts to prevent the above-described issue from occurring using a chelating agent in order to maintain the stability of the metal ions in the ink (e.g., see Japanese Patent No. 4,389,436). However, in an ink including a chelating agent of the related art, the chelating agent contained in the ink has poor biodegradability and therefore may pose a negative impact on the environment. In addition, there has been a demand for an improvement in droplet ejection consistency.

### SUMMARY

An advantage of some aspects of the invention is to provide an ink for ink jet recording which includes a chelating agent having good biodegradability and which has improved ejection consistency over a prolonged period of time, a recording apparatus including the ink for ink jet recording which includes a chelating agent having good biodegradability and which has improved ejection consistency over a prolonged period of time, and a recorded medium produced using the ink for ink jet recording which includes a chelating agent having good biodegradability and which has improved ejection consistency over a prolonged period of time.

In order to achieve the advantage, an ink for ink jet recording according to a first aspect of the invention includes a chelating agent represented by Structural Formula (1) or (2) and water. The ink has a hydrogen ion exponent (pH) of more than 7 and 10 or less.

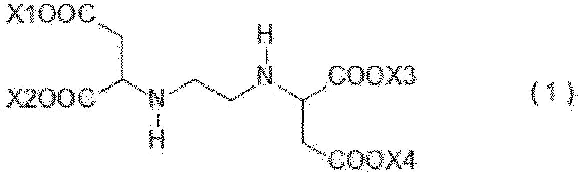

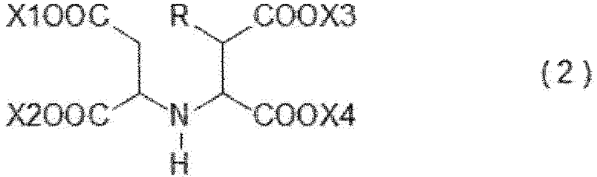

In Structural Formulae (1) and (2), R represents a hydrogen atom or a hydroxyl group and X1 to X4 each independently represent a hydrogen atom, an alkali metal atom, an alkaline-earth metal atom, or an ammonium group. This provides the ink for ink jet recording which includes a chelating agent having good biodegradability and which has improved ejection consistency over a prolonged period of time. The expression "a chelating agent represented by Structural Formula (1) or (2)" includes a mixture of different chelating agents, each having the Structural Formula (1) or (2).

In the above-described ink for ink jet recording, the content of the chelating agent is preferably 0.005% by mass or more and 2.0% by mass or less. In this case, a relative reduction in the contents of constituents other than the chelating agent may be suppressed and this allows the other constituents to produce their functions more effectively. In addition, the advantageous effects produced by including the chelating agent (e.g., improvements in ink-ejection consistency in an ink jet method, the color forming property of a printed portion formed using the ink for ink jet recording, the dispersion stability of a pigment, and the stability during preservation of the ink for inkjet recording) may be further enhanced.

The above-described ink for ink jet recording preferably includes a colorant, which is a dye or a pigment. In this case, the ink for ink jet recording may be suitably used for forming an image. The above-described ink for ink jet recording preferably includes a trialkanolamine. In this case, the dispersion stability of the ink for ink jet recording may be further improved.

The above-described ink for ink jet recording is preferably used in an ink jet recording apparatus including an ink flow path connected to the ink jet recording apparatus with a rubber member containing a salt of a polyvalent metal. In production of rubber members, generally, a salt of a polyvalent metal, such as zinc oxide or magnesium oxide, is used as a filler, a vulcanizing agent, a vulcanization assistant, or the like. There has been an issue that, when a rubber member is brought into contact with an ink, ions of the metal constituting the salt of a polyvalent metal elute from the rubber member and then precipitate as a metal and this causes unsuccessful droplet ejection. However, the ink for ink jet recording according to the first aspect of the invention allows occurrence of the above-described issue to be effectively suppressed even in a recording apparatus including an ink flow path connected to the recording apparatus with such a rubber member. In other words, the advantageous effect of the ink for ink jet recording according to the first aspect of the invention may become particularly significant in a recording apparatus including an ink flow path connected to the recording apparatus with a rubber member containing a salt of a polyvalent metal. In the above-described ink for ink jet recording, the polyvalent metal is preferably zinc. In this case, the ejection consistency over a prolonged period of time may be particularly improved.

A recording apparatus according to a second aspect of the invention includes the ink for ink jet recording according to the first aspect of the invention. This provides a recording apparatus including the ink for ink jet recording which includes a chelating agent having good biodegradability and which has improved ejection consistency over a prolonged period of time.

A recorded medium according to a third aspect of the present invention is produced using the ink for ink jet recording according to the first aspect of the invention. This provides a recorded medium produced using the ink for ink jet recording which includes a chelating agent having good biodegradability and which has improved ejection consistency over a prolonged period of time.

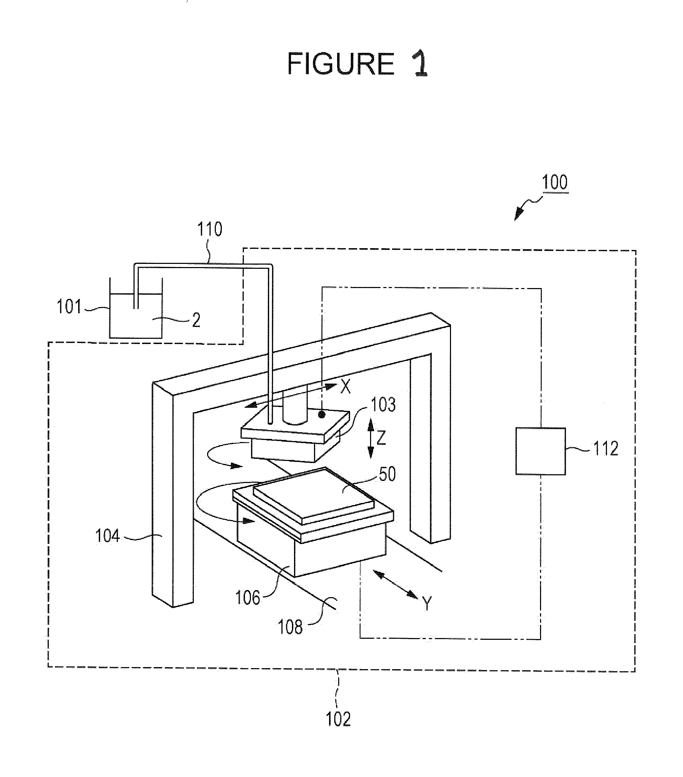

### BRIEF DESCRIPTION OF THE DRAWING

Embodiments of the invention will now be described by way of example only with reference to the accompanying drawing, wherein like numbers reference like elements.

The Figure is a perspective view of an example of a recording apparatus (droplet ejection apparatus) according to an embodiment of the invention.

### DESCRIPTION OF EXEMPLARY EMBODIMENTS

Preferred embodiments of the invention are described below.

### Ink for Ink Jet Recording

The ink for ink jet recording according to a first embodiment of the invention is now described. The ink for ink jet recording according to the first embodiment is an ink to be ejected by an ink jet method and includes a chelating agent represented by Structural Formula (1) or (2) and water. The hydrogen ion exponent (pH) of the ink is more than 7 and 10 or less.

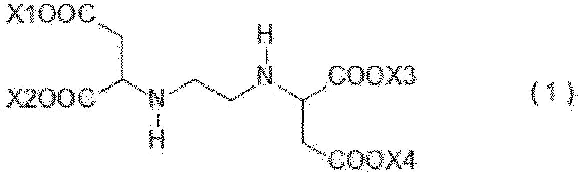

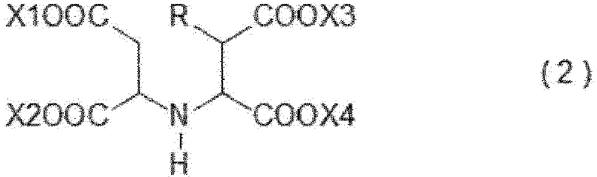

Thus, the ink (water-based ink) for inkjet recording according to the first embodiment includes the specific chelating agent described above, and the pH of the ink falls within the predetermined range. This may markedly improve ink-ejection consistency in an inkjet method. Since the above-described chelating agent has good biodegradability, disposal of a recorded medium produced using the ink for ink jet recording according to the first embodiment, a cartridge filled with the ink for ink jet recording according to the first embodiment, or a recording apparatus in which the ink for ink jet recording according to the first embodiment has been used causes low environmental load. Since the ink for ink jet recording according to the first embodiment includes the above-described chelating agent, the color forming property of a printed portion formed using the ink for ink jet recording may be improved.

The advantageous effects described above can be produced when all of the above-described conditions are satisfied but are not produced if even one of these conditions is not satisfied. For example, if the above-described chelating agent is not used, the ink-ejection consistency in an inkjet method may be degraded. This is presumably because it is difficult to prevent, to a sufficient degree, metal ions that are present in an ink or eluted from a member constituting an ink flow path of a recording apparatus from precipitating as a metal.

In the case where another chelating agent is used instead of the above-described chelating agent, the effect of improving the ejection consistency is small compared with the case where the above-described chelating agent is used although the ejection consistency may be improved to a certain degree. In addition, use of chelating agents that have been used in the related art may pose a negative impact on the environment because they have poor biodegradability. If the pH of the ink for ink jet recording is less than the lower limit described above, corrosion of a component of a printer or the like may occur. If the pH of the ink for ink jet recording is more than the upper limit described above, corrosion of a component of a printer or the like may occur. Herein, hydrogen ion exponent (pH) is measured at 25°C by a method conforming to JIS Z 8802.

Constituents of the ink for ink jet recording according to the first embodiment are described in detail below.

### Water

The ink for ink jet recording according to the first embodiment includes water, which serves as a solvent in which the chelating agent is dissolved. When the ink for inkjet recording includes a pigment, the water serves also as a dispersion medium in which the pigment is dispersed. When the ink for inkjet recording includes a dye, the water serves also as a solvent in which the dye is dissolved.

The water content of the ink for ink jet recording according to the first embodiment is preferably 50% by mass or more and 90% by mass or less and more preferably 60% by mass or more and 85% by mass or less. This markedly improves the stability during preservation and the ejection consistency of the ink for ink jet recording and markedly increases the image density of a printed portion formed using the ink for ink jet recording. If the water content is less than the lower limit described above, the stability during preservation and the ejection consistency of the ink for ink jet recording are likely to be degraded. If the water content is more than the upper limit described above, it may become difficult to increase the image density of a printed portion formed using the ink for ink jet recording depending on, for example, the type or the content of the colorant used.

### Chelating Agent

The ink for ink jet recording according to the first embodiment includes a chelating agent that is a compound represented by Structural Formula (1) or (2) shown above. This compound (chelating agent) forms a chelate with metal ions contained in the ink and also with metal ions eluted from a component of an inkjet recording apparatus with efficiency. This suppresses precipitation of a metal in the recording apparatus consistently over a prolonged period of time, which markedly improves the ink-ejection consistency. The above-described chelating agent is environmentally friendly because it has good biodegradability.

In Structural Formula (2), R represents a hydrogen atom or a hydroxyl group. R is preferably a hydrogen atom because, in this case, the chelating ability of the chelating agent at a pH of more than 7 and 10 or less may be further enhanced and, as a result, the chelating agent may produce the advantageous effects described above more significantly. In Structural Formulae (1) and (2), X1 to X4 are each independently a hydrogen atom, an alkali metal atom, an alkaline-earth metal atom, or an ammonium group. Thus, X1 to X4 need not be the same as each other. Preferably, X1 to X4 are each independently a hydrogen atom or an alkali metal atom because, in this case, the chelating agent may produce its chelating ability in the ink more efficiently.

The content of the chelating agent contained in the ink for ink jet recording according to the first embodiment is preferably 0.005% by mass or more and 2.0% by mass or less and more preferably 0.01% by mass or more and 1.0% by mass or less. When the content of the chelating agent falls within the above-described range, a relative reduction in the contents of a colorant and the like is suppressed and this allows the colorant and the like to produce their functions more effectively. In addition, in this case, the ink may produce the above-described advantageous effects significantly due to the above-described chelating agent included therein more. However, if the content of the chelating agent is less than the lower limit described above, the ink may not be able to sufficiently produce the advantageous effects due to the above-described chelating agent included therein depending on the other constituents of the ink for inkjet recording, the material of a component constituting a flow path of a recording apparatus, or the like. If the content of the chelating agent is more than the upper limit described above, the color forming property of the ink may be degraded. In the case where the ink for ink jet recording includes a plurality of the chelating agents, each of Structural Formula (1) or (2), the total sum of the contents of the chelating agents preferably falls within the above-described range. In particular, in order to use the ink as a cleaning liquid, the content of the chelating agent is preferably 0.3% by mass or more and 2.0% by mass or less from the viewpoints of cleaning ability and cost.

### Colorant

The ink for ink jet recording according to the first embodiment preferably includes a colorant, which is a dye or a pigment. In this case, the ink for ink jet recording may be suitably used for forming an image. Examples of the colorant include various types of pigments and dyes. In particular, a resin-dispersion-type pigment and a self-dispersing-type pigment are preferable. The self-dispersing-type pigment is more likely to cause aggregation on the record medium described below in detail than other colorants, which is advantageously used in order to increase the optical density (i.e., image density) of a printed portion formed using the ink for ink jet recording. Use of the self-dispersing-type pigment allows the viscosity of the ink for ink jet recording to be readily controlled within an appropriate range, which increases ease of handling of the ink. The self-dispersing-type pigment is a pigment capable of dispersing uniformly in the ink for ink jet recording without addition of a dispersing agent. The term "dispersing" herein refers to a state in which a self-dispersing-type pigment is present with stability without addition of a dispersing agent. Examples of such a state include a state in which a self-dispersing-type pigment is dispersed and a state in which it is dissolved. The ink for inkjet recording including the self-dispersing-type pigment has higher dispersion stability than an ordinary ink for ink jet recording which includes a pigment other than a self-dispersing-type pigment and a dispersing agent. The ink for ink jet recording including the self-dispersing-type pigment also has an adequate viscosity. Therefore, the ink for inkjet recording including the self-dispersing-type pigment is capable of containing a pigment in a larger amount and is thus advantageously used in order to form an image having a particularly good color forming property. Herein, the term "self-dispersing-type pigment" refers to a surface-modified pigment including one or more functional groups selected from the group consisting of a carbonyl group, a carboxyl group, an aldehyde group, a hydroxyl group, a sulfone group, an amino group, a phosphate group, and salts of these functional groups, the functional groups being each bonded to the surface of the pigment directly or indirectly with an alkyl group, an aryl group, or the like.

Examples of a pigment capable of forming into the self-dispersing-type pigment or the resin-dispersion-type pigment include organic pigments such as azo lake, an insoluble azo pigment, a condensed azo pigment, a chelate azo pigment, a phthalocyanine pigment, a perylene pigment, a perinone pigment, a quinacridone pigment, a thioindigo pigment, an isoindolinone pigment, a quinophthalone pigment, a dioxazine pigment, an anthraquinone pigment, a nitro pigment, a nitroso pigment, and aniline black; and inorganic pigments such as titanium white, Chinese white, white lead, carbon black, iron oxide red, vermilion, cadmium red, chrome yellow, ultramarine blue, cobalt blue, cobalt violet, and zinc chromate. Although a metal complex pigment, such as a phthalocyanine pigment, may disadvantageously cause a large amount of polyvalent metal ions to be produced in an ink composition, use of the ink for ink jet recording according to the first embodiment may reduce the amount of polyvalent metal ions produced.

The self-dispersing-type pigment may be prepared by, for example, attaching a functional group or molecules including the functional group to the surface of the pigment through chemical bonds such as coordinate bonds or grafting through a physical treatment such as vacuum plasma or a chemical treatment. For example, the self-dispersing-type pigment may be prepared by the method disclosed in JP-A-8-3498. The self-dispersing-type pigment may be a commercially available product, and examples thereof include "Microjet CW1" and "Microjet CW2" produced by ORIENT CHEMICAL INDUSTRIES CO., LTD. and "CAB-O-JET 200" and "CAB-O-JET 300" produced by Cabot Corporation. The average particle size of the pigment is preferably 10 nm or more and 300 nm or less and more preferably 40 nm or more and 200 nm or less. In this case, the stability during preservation of the ink for ink jet recording and the ejection consistency in an ink jet method may be markedly improved.

The content of the colorant in the ink for ink jet recording according to the first embodiment is preferably 0.1% by mass or more and 10% by mass or less and more preferably 0.2% by mass or more and 7% by mass or less. When the content of the colorant falls within the above-described range, both the ejection consistency in an ink jet method and the image density of a printed portion may be realized at a further high level. When the ink for ink jet recording includes a plurality of the colorants, the total sum of the contents of the colorants preferably falls within the above-described range.

Examples of a resin dispersing agent used for the resin-dispersion-type pigment include poly(vinyl alcohol)s, polyacrylic acid, acrylic acid-acrylonitrile copolymer, vinyl acetate-acrylic acid ester copolymer, acrylic acid-acrylic acid ester copolymer, styrene-acrylic acid copolymer, styrene-methacrylic acid copolymer, styrene-methacrylic acid-acrylic acid ester copolymer, styrene-α-methylstyrene-acrylic acid copolymer, styrene-α-methylstyrene-acrylic acid-acrylic acid ester copolymer, styrene-maleic acid copolymer, styrene-maleic anhydride copolymer, vinylnaphthalene-acrylic acid copolymer, vinylnaphthalene-maleic acid copolymer, vinyl acetate-maleic acid ester copolymer, vinyl acetate-crotonic acid copolymer, vinyl acetate-acrylic acid copolymer, and salts of these compounds. Among these compounds, in particular, a copolymer of a monomer having a hydrophobic functional group and a monomer having a hydrophilic functional group; and a polymer of monomers each having both a hydrophobic functional group and a hydrophilic functional group are preferable. Any type of copolymer such as a random copolymer, a block copolymer, an alternating copolymer, or a graft copolymer may be used.

The weight-average molecular weight of the resin dispersing agent is preferably 1,000 or more and 100,000 or less and is more preferably 3,000 or more and 10,000 or less. When the molecular weight falls within the above-described range, the pigment may be dispersed in water with improved stability and, for example, the viscosity of an ink composition including the pigment may be readily controlled. The amount of the resin dispersing agent added is preferably 10 parts by mass or more and 90 parts by mass or less and is more preferably 30 parts by mass or more and 80 parts by mass or less relative to 100 parts by mass of the pigment. When the amount of the resin dispersing agent added falls within the above-described range, the dispersion stability of the pigment in water may be further improved. The pigments that can be used for preparing the resin-dispersion-type pigment may be the same as the above-described pigments used for preparing the self-dispersing-type pigment.

### Alkanediol and Glycol Ether

The ink for ink jet recording according to the first embodiment may include one or more compounds selected from the group consisting of alkanediols and glycol ethers. In this case, the ink for ink jet recording may be suitably used for forming an image. In particular, the alkanediol is preferably a 1,2-alkanediol having a carbon number of 4 or more and 6 or less. In this case, the above-described advantageous effect may be further enhanced. Examples of the 1,2-alkanediol having a carbon number of 4 or more and 6 or less include 1,2-butanediol, 1,2-pentanediol, and 1,2-hexanediol. In particular, 1,2-hexanediol is preferable. In this case, the above-described advantageous effect may be further enhanced.

The glycol ether is preferably an alkylene glycol alkyl ether represented by Structural Formula (3) below.

R¹-(O-CH₂-CH(-CH₃))ₖ-(O-CH₂-CH₂)ₙ-O-R² (3)

(where R¹ and R² each independently represent a hydrogen atom or an alkyl group having a carbon number of 1 or more and 4 or less, n is an integer of 0 or more and 3 or less, and k is an integer of 0 or more and 3 or less. However, R¹ and R² cannot be hydrogen atoms at the same time, and n and k cannot be set to 0 at the same time)

In this case, the above-described advantageous effect may be further enhanced. When the ink for ink jet recording includes an alkanediol and/or a glycol ether, the total sum of the contents of these compounds is preferably 1% by mass or more and 10% by mass or less and is more preferably 2% by mass or more and 7% by mass or less. In this case, the ink for ink jet recording may be suitably used for forming an image.

### Trialkanolamine

The ink for ink jet recording according to the first embodiment may include a trialkanolamine. In this case, the pH of the ink for ink jet recording may be controlled appropriately and the dispersion stability of the ink for inkjet recording may be further improved. The ink for ink jet recording preferably includes trialkanolamines that are triethanolamine and/or triisopropanolamine. In this case, the pH of the ink for ink jet recording may be controlled appropriately and the dispersion stability of the ink for ink jet recording may be further improved.

When the ink for ink jet recording includes a trialkanolamine, the content of the trialkanolamine in the ink for ink jet recording is preferably 0.1% by mass or more and 3.5% by mass or less, is more preferably 0.5% by mass or more and 3.0% by mass or less, and is further preferably 1.0% by mass or more and 3.0% by mass or less. In this case, the pH of the ink for ink jet recording may be controlled appropriately and the dispersion stability of the ink for ink jet recording may be further improved. When the ink for ink jet recording includes a plurality of trialkanolamines, the total sum of the contents of those trialkanolamines preferably falls within the above-described range.

### Other Constituents

The ink for ink jet recording may include constituents other than the above-described constituents. Examples of the other constituents include resin materials such as styrene-acrylic acid copolymer, styrene-butadiene copolymer, a urethane resin, an acrylic resin, a methacrylic resin, polycarbonate, and polyester; waxes such as hydrocarbon waxes including ozokerite, selsyn, a paraffin wax, a micro wax, a microcrystalline wax, petrolatum, a Fischer-Tropsch wax, and the like, ester waxes including a carnauba wax, a rice bran wax, methyl laurate, methyl myristate, methyl palmitate, methyl stearate, butyl stearate, a candelilla wax, a cotton wax, a Japan wax, a beeswax, lanoline, a montan wax, a fatty acid ester, a polyglycerol fatty acid ester, and the like, olefin waxes including a polyethylene wax, a polypropylene wax, an oxidized polyethylene wax, an oxidized polypropylene wax, and the like, amide waxes including 12-hydroxystearic acid amide, stearic acid amide, phthalic anhydride imide, and the like, ketone waxes including laurone, stearone, and the like, and ether waxes; pyrrolidone derivatives such as 2-pyrrolidone, N-methyl pyrrolidone (1-methyl-2-pyrrolidone); a dispersing agent; a preservative and fungicide; a pH adjuster; a chelating reagent; an anticorrosive; an ultraviolet absorber; an antifoaming agent; a surface-tension regulator; polysiloxane compounds; polyhydric alcohols such as glycerin, diethylene glycol, and triethylene glycol; propylene glycol; dipropylene glycol; and tripropylene glycol.

Examples of the preservative and fungicide include organosulfur compounds, organic nitrogen and sulfur compounds, organohalogen compounds, haloarylsulfone compounds, propargyl iodide compounds, N-haloalkylthio compounds, benzothiazole compounds, nitrile compounds, pyridine compounds, 8-oxyquinoline compounds, isothiazoline compounds, dithiol compounds, pyridine oxide compounds, nitropropane compounds, organotin compounds, phenol compounds, quaternary ammonium salt compounds, triazine compounds, thiadiazin compounds, anilide compounds, adamantane compounds, dithiocarbamate compounds, bromoindanone compounds, benzylbromoacetate compounds, and inorganic salt compounds. An example of the organohalogen compounds is sodium pentachlorophenolate. Examples of the pyridine oxide compounds include sodium pyridinethione-1-oxide and zinc pyridinethione-1-oxide. Examples of the isothiazoline compounds include 1-benzisothiazoline-3-one amine salt, 1,2-benzisothiazoline-3-one, 2-n-octyl-4-isothiazoline-3-one, 5-chloro-2-methyl-4-isothiazoline-3-one, 5-chloro-2-methyl-4-isothiazoline-3-one magnesium chloride, 5-chloro-2-methyl-4-isothiazoline-3-one calcium chloride, and 2-methyl-4-isothiazoline-3-one calcium chloride. Examples of other preservatives and fungicides include sodium dehydroacetate, sodium sorbate, and sodium benzoate.

Addition of the pH adjuster in the ink for ink jet recording may particularly improve, for example, the stability during preservation of the ink for ink jet recording. In addition, the reliability of a recorded medium produced using the ink for ink jet recording may be particularly increased. Examples of the pH adjuster include alkanolamines such as diethanolamine, dimethylethanolamine, and diethylethanolamine; alkali-metal hydroxides such as lithium hydroxide, sodium hydroxide, and potassium hydroxide; ammonium hydroxide; alkali-metal carbonates such as lithium carbonate, sodium carbonate, and potassium carbonate; and aminosulfonic acids such as taurine.

Examples of the chelating reagent include ethylenediaminetetraacetic acid disodium salt, nitrilotriacetic acid sodium salt, hydroxyethylethylenediaminetriacetic acid sodium salt, diethylenetriaminepentaacetic acid sodium salt, and uracildiacetic acid sodium salt.

Examples of the anticorrosive include acid sulfites, sodium thiosulfate, ammonium thioglycolate, diisopropylammonium nitrite, pentaerythritol tetranitrate, dicyclohexylammonium nitrite, and benzotriazole compounds.

Examples of the ultraviolet absorber include benzophenone compounds, cinnamic acid compounds, triazine compounds, stilbene compounds, and "fluorescent brightening agents" (compounds such as benzoxazole compounds which absorb ultraviolet light and emit fluorescence).

Examples of the antifoaming agent include highly oxidized oil compounds, glycerin fatty acid ester compounds, fluorine compounds, silicone compounds, and acetylene compounds.

Examples of the surface-tension regulator include surfactants such as anionic surfactants, amphoteric surfactants, cationic surfactants, and nonionic surfactants.

Examples of the anionic surfactants include alkyl sulfocarboxylate, α-olefin sulfonate, polyoxyethylene alkyl ether acetate, N-acylamino acid and its salt, N-acylmethyl taurine, alkyl sulfate polyoxyalkyl ether sulfate, alkyl sulfate polyoxyethylene alkyl ether phosphate, rosin acid soap, castor oil sulfuric acid ester, lauryl alcohol sulfuric acid ester, alkylphenol phosphoric acid ester, alkyl phosphoric acid ester, alkylaryl sulfonate, diethyl sulfosuccinate, diethylhexyl sulfosuccinate, and dioctyl sulfosuccinate.

Examples of the amphoteric surfactants include betaine lauryldimethylaminoacetate, 2-alkyl-N-carboxymethyl-N-hydroxyethylimidazolinium betaine, cocamidopropyl betaine, polyoctylpolyaminoethylglycine, and imidazoline derivatives.

Examples of the cationic surfactants include 2-vinylpyridine derivatives and poly(4-vinylpyridine) derivatives.

Examples of the nonionic surfactants include ether surfactants such as polyoxyethylene nonylphenyl ether, polyoxyethylene octylphenyl ether, polyoxyethylene dodecylphenyl ether, polyoxyethylene oleyl ether, polyoxyethylene lauryl ether, and polyoxyethylene alkyl ether; ester surfactants such as polyoxyethylene oleate, polyoxyethylene distearate, sorbitan laurate, sorbitan monostearate, sorbitan monooleate, sorbitan sesquioleate, polyoxyethylene monooleate, and polyoxyethylene stearate; and acetylene glycol (alcohol) surfactants such as 2,4,7,9-tetramethyl-5-decyne-4,7-diol, 3,6-dimethyl-4-octyn-3,6-diol, and 3,5-dimethyl-1-hexyn-3-ol.

As described above, the hydrogen ion exponent (pH) of the ink for ink jet recording according to the first embodiment may be more than 7 and 10 or less. The pH of the ink is preferably 8 or more and 9.5 or less because, in this case, the above-described advantageous effects of the ink for ink jet recording according to the first embodiment may be produced more significantly. The surface tension (at 25°C) of the ink for ink jet recording according to the first embodiment is preferably 20 mN/m or more and 50 mN/m or less and is more preferably 25 mN/m or more and 40 mN/m or less. The surface tension of the ink for ink jet recording may be measured by a method conforming to JIS K 3362 using, for example, Surface Tensiometer CBVP-A3 (produced by Kyowa Interface Science Co., LTD.).

The viscosity (at 25°C) of the ink for ink jet recording according to the first embodiment is preferably 2 mPa·s or more and 20 mPa·s or less. In this case, the ejection consistency (e.g., consistent amount of ink ejected and the flight characteristics of droplets), the ejection responsiveness (e.g., speed of response and capability of responding to high frequency, i.e., frequency characteristics), and the like of the ink for ink jet recording may be particularly improved. The viscosity of the ink for inkjet recording may be measured by a method conforming to JIS Z 8809 using a vibrational viscometer.

### Recording Apparatus

The recording apparatus according to a second embodiment of the invention is now described. The recording apparatus according to the second embodiment includes the ink for ink jet recording according to the first embodiment. This provides a recording apparatus including an ink for ink jet recording which includes a chelating agent having good biodegradability and which has improved ejection consistency over a prolonged period of time.

An example of the recording apparatus (droplet ejection apparatus) according to the second embodiment is described below. The Figure is a perspective view of an example of the recording apparatus (droplet ejection apparatus) according to the second embodiment. As shown in the Figure, a recording apparatus (droplet ejection apparatus) 100 used for ejecting an ink includes a tank 101 in which an ink 2 for ink jet recording is stored, a tube (liquid-transportation tube) 110 through which the ink 2 for inkjet recording stored in the tank 101 is transported, and an ejection scanning section 102 to which the ink 2 for ink jet recording is supplied from the tank 101 through the tube 110. The ejection scanning section 102 includes a droplet ejection unit 103 including a carriage and a plurality of droplet ejection heads (record heads) disposed on the carriage, a first position control unit (transportation unit) 104 used for control the position of the droplet ejection unit 103, a stage 106 supporting a record medium 50, a second position control unit (transportation unit) 108 used for control the position of the stage 106, and a control unit 112. The tank 101 and the plurality of droplet ejection heads of the droplet ejection unit 103 are linked to each other with the tube 110. The plurality of droplet ejection heads are each supplied with the ink 2 for inkjet recording transported from the tank 101 by compressed air.

The first position control unit 104 causes the droplet ejection unit 103 to move in the X-axis direction or in the Z-axis direction perpendicular to the X-axis direction on the basis of a signal from the control unit 112. The first position control unit 104 also causes the droplet ejection unit 103 to rotate around an axis parallel to the Z-axis. In this embodiment, the Z-axis direction is a direction parallel to the vertical direction, i.e., the direction of gravitational acceleration. The second position control unit 108 causes the stage 106 to move in the Y-axis direction, which is perpendicular both to the X-axis direction and to the Z-axis direction, on the basis of a signal from the control unit 112. The second position control unit 108 also causes the stage 106 to rotate around an axis parallel to the Z-axis.

The stage 106 includes a plane parallel both to the X-axis direction and to the Y-axis direction. The stage 106 is configured to allow the record medium 50, on which the ink 2 for ink jet recording is to be deposited, to be fixed to or supported on the plane. As described above, the droplet ejection unit 103 is caused to move in the X-axis direction by the first position control unit 104, and the stage 106 is caused to move in the Y-axis direction by the second position control unit 108. In other words, the position of the droplet ejection heads relative to the stage 106 is changed using the first position control unit 104 and the second position control unit 108. That is, the droplet ejection unit 103 is moved relative to the record medium 50 supported on the stage 106. The control unit 112 receives ejection data, which indicate the relative positions at which the ink 2 for ink jet recording is to be ejected, from an external information processing apparatus.

An example of a recording method is an electrostatic attraction method that is a method of recording by applying a strong electric field between a nozzle and an accelerating electrode disposed in front of the nozzle to cause an ink (ink composition) to be successively ejected from the nozzle in the form of ink droplets and then inputting a record information signal to deflection electrodes while the ink droplets are flying between the deflection electrodes. In this method, alternatively, the ink droplets may be ejected on the basis of a record information signal without deflecting the ink droplets. Another example of a recording method is a piezo method, and examples thereof include a method of forcibly ejecting ink droplets by applying a pressure to an ink using a miniature pump and mechanically vibrating a nozzle using a quartz oscillator or the like; and a method of recording by applying a pressure to an ink and sending a record information signal using a piezoelectric element at the same time and thereby ejecting ink droplets. Another example of a recording method is a thermal jet method, which is a method of recording by heating an ink on the basis of a record information signal using a micro electrode to bubble the ink and thereby ejecting ink droplets.

Using the above-described apparatus, the ink 2 for ink jet recording may be deposited at desired positions with high positional accuracy and efficiency. In the Figure, the recording apparatus 100 includes only one tank 101, in which the ink 2 for ink jet recording is stored, only one tube 110, and the like for a single type of the ink for ink jet recording. However, the recording apparatus 100 may include as many sets of these members as the number of types of the ink for ink jet recording used. In production of recorded media, a plurality of the recording apparatuses 100 may be used, corresponding to plural types of inks for ink jet recording. In production of recorded media, the record head may be fixed and alternatively the record medium may be moved. In this case, the structures of the recording apparatuses may be the same as or different from one another.

A rubber member is used in joints of a recording apparatus. In production of rubber members, generally, a salt of a polyvalent metal, such as zinc oxide or magnesium oxide, is used as a filler, a vulcanizing agent, a vulcanization assistant, or the like. There has been an issue that, when a rubber member is brought into contact with an ink, ions of the metal constituting the salt of a polyvalent metal elute from the rubber member and then precipitate as a metal and this causes unsuccessful droplet ejection. However, the ink for ink jet recording according to the first embodiment allows occurrence of the above-described issue to be effectively suppressed even in a recording apparatus that includes an ink flow path connected to the recording apparatus with such a rubber member. In other words, the advantageous effect of the ink for ink jet recording according to the first embodiment may become particularly significant in a recording apparatus that includes an ink flow path connected to the recording apparatus with a rubber member containing a salt of a polyvalent metal.

Examples of the rubber member constituting the recording apparatus 100 include the tube 110 and packing. Examples of a rubber constituting the rubber member include butyl rubber, silicone rubber, acrylic rubber, urethane rubber, acrylonitrile rubber, and ethylene propylene rubber. An example of a rubber in which the above-described filler, vulcanizing agent, or vulcanization assistant is commonly used is butyl rubber.

Examples of a polyvalent metal contained in the rubber member include zinc, magnesium, calcium, iron, copper, and tin. In particular, the chelating agent used in the embodiment produces its advantageous effect when the polyvalent metal ions contained in the chelating agent are zinc ions. Examples of the record medium 50 include paper such as plain paper or coated paper including an ink-absorbing layer, a plastic film, and a glass sheet.

### Recorded Medium

The recorded medium according to a third embodiment of the invention is now described. The recorded medium according to the third embodiment is produced using the ink for ink jet recording according to the first embodiment. This provides a recorded medium produced using an ink for ink jet recording which includes a chelating agent having good biodegradability and which has improved ejection consistency over a prolonged period of time.

Preferred embodiments of the invention are described above, but the invention is not limited to the preferred embodiments. For example, the ink for ink jet recording according to the first embodiment does not necessarily include a colorant although, in the above-described embodiments, the case where the ink for ink jet recording according to the first embodiment includes a colorant is mainly described. The ink for ink jet recording according to the first embodiment may be used as, for example, a cleaning liquid used for cleaning a recording apparatus. The recording apparatus according to the second embodiment may have any structure as long as it includes the ink for ink jet recording according to the first embodiment. The structure of the recording apparatus according to the second embodiment is not limited to the above-described structures. The recording apparatus according to the second embodiment may be a home-use recording apparatus or an industrial-use recording apparatus (e.g., large-format printer).

### EXAMPLES

### 1. Preparation of ink for inkjet recording

Inks for ink jet recording were prepared as follows.

### Example 1

Water and a chelating agent represented by Structural Formula (2) (where R was a hydrogen atom and X1, X2, X3, and X4 were all a sodium atom) were mixed with each other to prepare an ink for ink jet recording.

### Examples 2 to 19

An ink for ink jet recording was prepared as in Example 1, except that the types and the amounts of the constituents used for preparing the ink for ink jet recording were changed to set the composition of the ink as shown in Table 1 or 2.

### Comparative Examples 1 to 7

An ink for ink jet recording was prepared as in Example 1, except that the types and the amounts of the constituents used for preparing the ink for ink jet recording were changed to set the composition of the ink as shown in Table 2.

Tables 1 and 2 summarize the compositions of the inks for inkjet recording prepared in Examples and Comparative Examples. In Tables 1 and 2, Pigment Blue 15:3 (average particle size: 100 nm, dispersion resin: styrene-acrylic copolymer, glass transition point: 40°C), which was used as a colorant (resin-dispersion-type pigment), is abbreviated as "PB15:3"; styrene-acrylic copolymer (glass transition point: -10°C, average particle size: 90 nm) is abbreviated as "St-Ac"; glycerin is abbreviated as "GL"; 1,2-hexanediol is abbreviated as "1,2-HD"; triethylene glycol monobutyl ether is abbreviated as "GE1"; pentaethylene glycol mono-2-ethylhexyl ether is abbreviated as "GE2"; a compound (chelating agent) represented by Structural Formula (1) in which three of X1, X2, X3, and X4 were a hydrogen atom and the other one was a sodium atom is abbreviated as "C1-1"; a compound (chelating agent) represented by Structural Formula (1) in which three of X1, X2, X3, and X4 were a hydrogen atom and the other one was a potassium atom is abbreviated as "C1-2"; a compound (chelating agent) represented by Structural Formula (2) in which R was a hydrogen atom and all of X1, X2, X3, and X4 were a sodium atom is abbreviated as "C2-1"; a compound (chelating agent) represented by Structural Formula (2) in which R was a hydroxyl group and all of X1, X2, X3, and X4 were a sodium atom is abbreviated as "C2-2"; and ethylenediaminetetraacetic acid is abbreviated as "EDTA".

The amount of metal ions captured by each of the chelating agents used in Examples and Comparative Examples were determined as follows. Specifically, a plurality of inks each containing 0.01% by mass of a specific chelating agent was prepared. Then, a plurality of test samples were prepared for each of the inks by adding different amounts of zinc hydroxide to the ink. The test samples were all filtered, and the change in the absorbance of the resulting filtrate of each test sample was measured. The content of zinc hydroxide in a test sample in which the absorbance was changed (i.e., in which the pigment caused aggregation and was captured by the filter paper) was considered to be the capturing capacity of the chelating agent, and thereby the zinc-ion capturing capacity of each chelating agent was determined. As a result, it was confirmed that the metal-ion capturing capacity of the chelating agent C1-1 was 138, the metal-ion capturing capacity of the chelating agent C1-2 was 140, the metal-ion capturing capacity of the chelating agent C2-1 was 140, and the metal-ion capturing capacity of the chelating agent C2-2 was 134, based on 100 of the metal-ion capturing capacity of ethylenediaminetetraacetic acid (EDTA) used in Comparative Examples 3, 5, and 7. These results show that the ink for ink jet recording according to the first embodiment has good metal-ion capturing capability.

The surface tensions (at 25°C, as measured by a method conforming to JIS K 3362 using Surface Tensiometer CBVP-A3 produced by Kyowa Interface Science Co., LTD.) of the inks for inkjet recording prepared in Examples all fell within the range of 25 mN/m or more and 40 mN/m or less. The viscosity (at 25°C, as measured by a method conforming to JIS Z 8809 using a vibrational viscometer) of the inks for inkjet recording prepared in Examples all fell within the range of 2 mPa·s or more and 20 mPa·s or less. The average particle size was measured using a particle size analyzer (Microtrac UPA, produced by NIKKISO CO., LTD.).

**Table 1**

| | Colorant | | Chelating agent | | Alkanediol and/or glycol ether | | Trialkanolamine | | Water | Other constituents | |
|---|---|---|---|---|---|---|---|---|---|---|---|
| | Type | Content (part by mass) | Type | Content (part by mass) | Type | Content (part by mass) | Type | Content (part by mass) | Content (part by mass) | Type | Content (part by mass) |
| Example 1 | - | - | C2-1 | 2.0 | - | - | - | - | 98.0 | - | - |
| Example 2 | - | - | C1-1 | 2.0 | - | - | - | - | 98.0 | - | - |
| Example 3 | - | - | C2-1 | 0.005 | 1,2-HD | 5.0 | - | - | 79.995 | GL | 15.0 |
| Example 4 | - | - | C1-1 | 0.005 | 1,2-HD | 5.0 | - | - | 79.995 | GL | 15.0 |
| Example 5 | - | - | C2-1 | 2.0 | GE1 | 5.0 | - | - | 78.0 | GL | 15.0 |
| Example 6 | - | - | C1-1 | 2.0 | GE1 | 5.0 | - | - | 78.0 | GL | 15.0 |
| Example 7 | PB15:3 | 4.0 | C2-1 | 0.005 | 1,2-HD | 5.0 | - | - | 74.495 | St-Ac/GL | 1.5/15.0 |
| Example 8 | PB15:3 | 4.0 | C1-1 | 0.005 | 1,2-HD | 5.0 | - | - | 74.495 | St-Ac/GL | 1.5/15.0 |
| Example 9 | PB15:3 | 4.0 | C2-1 | 0.2 | 1,2-HD | 5.0 | - | - | 74.3 | St-Ac/GL | 1.5/15.0 |
| Example 10 | PB15:3 | 4.0 | C1-1 | 0.2 | 1,2-HD | 5.0 | - | - | 74.3 | St-Ac/GL | 1.5/15.0 |
| Example 11 | PB15:3 | 4.0 | C2-1 | 2.0 | 1,2-HD | 5.0 | - | - | 74.5 | St-Ac/GL | 1.5/15.0 |
| Example 12 | PB15:3 | 4.0 | C1-1 | 2.0 | 1,2-HD | 5.0 | - | - | 74.5 | St-Ac/GL | 1.5/15.0 |
| Example 13 | PB15:3 | 4.0 | C2-1 | 0.2 | GE1 | 5.0 | - | - | 74.3 | St-Ac/GL | 1.5/15.0 |

**Table 2**

| | Colorant | | Chelating agent | | Alkanediol and/or glycol ether | | Trialkanolamine | | Water | Other constituents | |
|---|---|---|---|---|---|---|---|---|---|---|---|
| | Type | Content (part by mass) | Type | Content (part by mass) | Type | Content (part by mass) | Type | Content (part by mass) | Content (part by mass) | Type | Content (part by mass) |
| Example 14 | PB15:3 | 4.0 | C1-1 | 0.2 | GE1 | 5.0 | - | - | 74.3 | St-Ac/GL | 1.5/15.0 |
| Example 15 | PB15:3 | 4.0 | C2-1 | 0.2 | GE2 | 5.0 | - | - | 74.3 | St-Ac/GL | 1.5/15.0 |
| Example 16 | PB15:3 | 4.0 | C1-1 | 0.2 | GE2 | 5.0 | - | - | 74.3 | St-Ac/GL | 1.5/15.0 |
| Example 17 | PB15:3 | 4.0 | C2-1 | 2.0 | GE1 | 5.0 | - | - | 72.5 | St-Ac/GL | 1.5/15.0 |
| Example 18 | PB15:3 | 4.0 | C1-1 | 2.0 | GE1 | 5.0 | - | - | 72.5 | St-Ac/GL | 1.5/15.0 |
| Example 19 | PB15:3 | 4.0 | C1-2 | 2.0 | 1,2-HD | 5.0 | - | - | 72.5 | St-Ac/GL | 1.5/15.0 |
| Comparative Example 1 | PB15:3 | 4.0 | - | - | GE1 | 5.0 | - | - | 74.5 | St-Ac/GL | 1.5/15.0 |
| Comparative Example 2 | PB15:3 | 4.0 | - | - | 1,2-HD | 5.0 | - | - | 74.5 | St-Ac/GL | 1.5/15.0 |
| Comparative Example 3 | PB15:3 | 4.0 | EDTA | 0.02 | 1,2-HD | 5.0 | - | - | 74.48 | St-Ac/GL | 1.5/15.0 |
| Comparative Example 4 | PB15:3 | 4.0 | - | - | GE1 | 5.0 | - | - | 74.5 | St-Ac/GL | 1.5/15.0 |
| Comparative Example 5 | PB15:3 | 4.0 | EDTA | 0.02 | GE1 | 5.0 | - | - | 74.48 | St-Ac/GL | 1.5/15.0 |
| Comparative Example 6 | - | - | - | - | - | - | - | - | 100 | - | - |
| Comparative Example 7 | - | - | EDTA | 2.0 | - | - | - | - | 98.0 | - | - |

### 2. Evaluations

### 2.1 Stability during preservation

The inks for ink jet recording prepared in Examples 7 to 19 and Comparative Examples 1 to 5 were each evaluated in terms of stability during preservation as follows. The viscosity of each ink composition and the average particle size of the pigment contained in the ink composition were determined before and after a storage test of the ink composition, and a comparison of these results was made. The storage test was conducted at 70°C for 6 days.

Good: Noticeable changes in the evaluation items were not observed.

Poor: Changes in the evaluation items were observed and degradation of the dispersion state of the pigment was confirmed.

### 2.2 Biodegradability of chelating agent

The biodegradability of the chelating agent used for preparing each of the inks for ink jet recording in Examples and Comparative Examples was determined in accordance with OECD Test Guidelines No. 301. Specifically, activated sludge (30 mg/l) was added in an aqueous solution (100 mg/l) of the chelating agent, and the resulting mixture solution was subjected to a biodegradability test at 25°C for 4 weeks.

Good: Remarkable biodegradability was confirmed.

Poor: Biodegradability was not confirmed substantially.

### 2.3 Cleaning power

The inks for inkjet recording prepared in Examples and Comparative examples which did not include a colorant, that is, the inks for inkjet recording prepared in Examples 1 to 6 and Comparative Examples 6 and 7 were evaluated as follows. A recording apparatus (droplet ejection apparatus) as shown in Figure including a tube (liquid-transportation tube), which was a rubber member containing a salt of a polyvalent metal, was prepared. The tube (liquid-transportation tube) was composed of a material containing a butyl rubber and zinc oxide, which is a salt of a polyvalent metal.

The entirety of the flow path of the recording apparatus was filled with the ink for inkjet recording prepared in Comparative Example 1. Subsequently, 2,000,000 droplets of the ink for ink jet recording prepared in Comparative Example 1 were successively ejected from each nozzle of a droplet ejection head of the recording apparatus at 25°C at a relative humidity (RH) of 50% while the driving voltage waveform of a piezoelectric element was optimized. Then, operation of the recording apparatus was stopped. The recording apparatus was left at 60°C at a relative humidity (RH) of 90% for 24 hours with the flow path being filled with the ink for ink jet recording prepared in Comparative Example 1.

Subsequently, the ink contained in the ink flow path of the recording apparatus was replaced with a cleaning liquid that was the ink for ink jet recording prepared in any one of Examples and Comparative examples which do not include a colorant, that is, any one of the inks for inkjet recording prepared in Examples 1 to 6 and Comparative Examples 6 and 7. Thus, the ink flow path was cleaned, and then the cleaning liquid contained in the ink flow path of the recording apparatus was again replaced with the ink for ink jet recording prepared in Comparative Example 1.

The ink for ink jet recording prepared in Comparative Example 1, which was replaced again, was then successively ejected from the nozzles of the droplet ejection head at 25°C at a relative humidity (RH) of 50%. Then, for each 4,000,000 droplets elected from a particular nozzle near the center of the droplet ejection head, a deviation d between the center of the droplet landed and the center of its target point was measured. The average of the deviation d was rated on the following three scales. The smaller the average of the deviation d, the more effectively the deviation of flight path was suppressed, that is, the more effectively the ink flow path was cleaned with the cleaning liquid. Table 3 shows the results.
A: The average of the deviation d was less than 0.07 µm.
B: The average of the deviation d was 0.07 µm or more and less than 0.21 µm.
C: The average of the deviation d was 0.21 µm or more.

**Table 3**

| | Stability during preservation | Biodegradability | Cleaning power |
|---|---|---|---|
| Example 1 | - | Good | A |
| Example 2 | - | Good | A |
| Example 3 | - | Good | B |
| Example 4 | - | Good | B |
| Example 5 | - | Good | A |
| Example 6 | - | Good | A |
| Example 7 | Good | Good | - |
| Example 8 | Good | Good | - |
| Example 9 | Good | Good | - |
| Example 10 | Good | Good | - |
| Example 11 | Good | Good | - |
| Example 12 | Good | Good | - |
| Example 13 | Good | Good | - |
| Example 14 | Good | Good | - |
| Example 15 | Good | Good | - |
| Example 16 | Good | Good | - |
| Example 17 | Good | Good | - |
| Example 18 | Good | Good | - |
| Example 19 | Good | Good | - |
| Comparative Example 1 | Poor | - | - |
| Comparative Example 2 | Poor | - | - |
| Comparative Example 3 | Good | Poor | - |
| Comparative Example 4 | Poor | - | - |
| Comparative Example 5 | Good | Poor | - |
| Comparative Example 6 | - | - | C |
| Comparative Example 7 | - | Poor | A |

As is clearly shown in Table 3, the inks for ink jet recording according to the first embodiment of the invention produced satisfactory results. However, in Comparative Examples, satisfactory results were not produced.

The foregoing description has been given by way of example only and it will be appreciated by a person skilled in the art that modifications can be made without departing from the scope of the present invention.

## Claims

1. An ink for inkjet recording, the ink comprising:
a chelating agent represented by Structural Formula (1) or (2); and
water,
the ink having a hydrogen ion exponent (pH) of more than 7 and 10 or less, 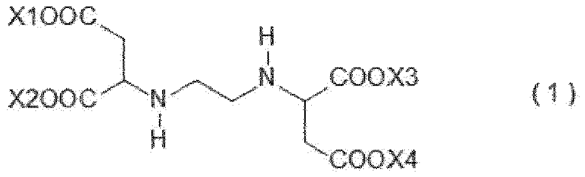 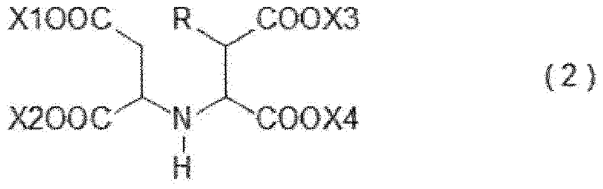
where R represents a hydrogen atom or a hydroxyl group and X1 to X4 each independently represent a hydrogen atom, an alkali metal atom, an alkaline-earth metal atom, or an ammonium group.

2. The ink for ink jet recording according to Claim 1,
wherein the content of the chelating agent is 0.005% by mass or more and 2.0% by mass or less.

3. The ink for ink jet recording according to Claim 1 or Claim 2, the ink further comprising a colorant, the colorant being a dye or a pigment.

4. The ink for ink jet recording according to any one of the preceding claims, the ink further comprising a trialkanolamine.

5. The ink for ink jet recording according to any one of the preceding claims, the ink being used in an ink jet recording apparatus including an ink flow path (110) connected to the inkjet recording apparatus with a rubber member containing a salt of a polyvalent metal.

6. The ink for ink jet recording according to Claim 5,
wherein the polyvalent metal is zinc.

7. A recording apparatus comprising the ink for inkjet recording according to any one of the preceding claims.

8. A recorded medium produced using the ink for ink jet recording according to any one of claims 1 to 6.
